# FASCICULE DE BREVET EUROPEEN

(11) **EP 1 685 073 B1**
(45) Date de publication et mention de la délivrance du brevet: **30.05.2007**
(21) Numéro de dépôt: 04805811.9
(22) Date de dépôt: 05.11.2004
(51) Int. Cl.: C03B 23/033, C03B 27/04, C03B 35/16, B65G 49/06

(54) **PROCEDE ET MACHINE D'OBTENTION DE FEUILLES DE VERRE BOMBEES**
VERFAHREN UND VORRICHTUNG ZUR HERSTELLUNG VON KONVEXEN GLASPLATTEN
METHOD AND MACHINE FOR THE PRODUCTION OF CONVEX GLASS SHEETS

(30) Priorité: 12.11.2003 FR 0350827
(43) Date de publication de la demande: 02.08.2006
(73) Titulaire: SAINT-GOBAIN GLASS FRANCE, 92400 Courbevoie (FR)
(72) Inventeur: LECLERCQ, Jacques, F-80240 ROISEL (FR); GARNIER, Gilles, F-60420 DOMPIERRE (FR)
(74) Mandataire: Colombier, Christian
(86) Numéro de dépôt international: PCT/FR2004/050568
(87) Numéro de publication internationale: WO 2005/047198

(56) Documents cités:
- EP-A- 0 133 114
- EP-A- 0 298 426
- EP-A- 0 346 198
- EP-A- 0 593 363
- US-A- 3 973 673
- US-A- 4 292 065
- US-A- 4 976 762
- US-A- 5 735 922

## Description

La présente invention concerne les techniques d'obtention de feuilles de verre bombées.

Plus particulièrement, l'invention concerne celles de ces techniques dans lesquelles les feuilles de verres sont amenées à défiler sur au moins un lit de conformation constitué par des tiges conformatrices, par exemple des éléments tournants disposés selon un trajet à profil courbe dans la direction du défilement des feuilles de verre.

L'invention s'applique par exemple à la réalisation de vitrages automobiles, par exemple du type vitres latérales.

De telles techniques de bombage sont actuellement mises en oeuvre avec des cadences de production très grandes dues notamment à la possibilité de faire suivre des feuilles de verre espacées les unes des autres de quelques centimètres seulement. Elles permettent une très grande reproductibilité du galbe et de la qualité optique des vitrages finaux.

Des procédés et machines de bombage sont décrits par exemple dans les EP-133 113, EP-133 114, EP 0 593 363, FR 2 442 219 et dans la demande internationale PCT WO 99/12855. De façon connue, les feuilles de verre sont amenées à leur température de ramollissement, puis elles défilent de manière ascendante dans un lit de conformation qui a un profil en quart de cercle ou inférieur à un quart de cercle, dans lequel elles entrent horizontalement de façon tangentielle et qui donne la courbure souhaitée aux feuilles de verre.

Une fois les feuilles mises en forme, elles sont trempées ou refroidies pour être durcies, puis un dispositif basculant permet de les replacer horizontalement en sortie de lit de conformation sur un convoyeur les entraînant vers une seconde zone de refroidissement puis vers la zone de sortie.

Ce procédé de bombage présente différents inconvénients.

Le premier est qu'en raison de la longueur limitée du lit de conformation, il faut trouver un compromis entre la productivité pour laquelle on augmente la vitesse de déplacement dans le lit de conformation, et les propriétés du verre, en particulier les propriétés optiques du verre, pour lesquelles il faut augmenter le temps de passage dans le lit de conformation, que ce soit pour la mise en forme de la feuille de verre ou pour son durcissement, en particulier la trempe.

Le second est que le dispositif basculant situé à la sortie du lit de conformation doit être réglé précisément à chaque fois que l'épaisseur des feuilles de verre est modifiée puisque les deux dernières paires de rouleau et contre-rouleau du lit doivent pincer l'extrémité arrière d'une feuille de verre qui se trouve dans une position verticale pour la faire basculer à l'aide d'un système mécanique sur le convoyeur jusque dans une position horizontale. Un tel pinçage peut marquer la feuille de verre. De plus, des problèmes mécaniques et d'usure des rouleaux de pincement peuvent se poser. Un tel dispositif de pincement est décrit dans EP 346198.

La présente invention apporte une solution à ces différents problèmes. A cet effet, les inventeurs ont envisagé de prolonger le lit de conformation et prévu des moyens pour que les feuilles de verre soient disposées sur le convoyeur en direction de la zone de sortie sans être pincées.

Ainsi, pour résoudre les deux principaux inconvénients du procédé de l'état antérieur de la technique, le lit de conformation a été prolongé selon l'arc initial jusqu'à s'étendre sur un arc de cercle de plus de 90°, permettant un retour des feuilles durcies dans le sens opposé à celui de leur arrivée.

A la sortie du lit de conformation, la feuille de verre n'est plus pincée mais elle bascule ou tombe directement en position d'être acheminée par le convoyeur en direction de la zone de sortie.

De plus, le déplacement de la feuille de verre à la sortie du lit de conformation se fait dans une direction opposée à celle du convoyeur d'entrée. Cet aménagement permet donc également un gain de place au sol.

L'invention offre l'avantage complémentaire dé permettre de modifier une installation existante qui aurait un profil de conformation sur un arc inférieur à 90°, en prévoyant le prolongement de celui-ci en suivant la courbure initiale.

La présente invention a donc d'abord pour objet un procédé de fabrication de feuilles de verre bombées, suivant lequel on amène des feuilles de verre à leur température de ramollissement, puis on les fait défiler sur un lit de conformation constitué par des éléments permettant leur avancement, disposés selon un trajet à profil en arc de cercle, les feuilles étant bombées dans leur direction d'avancement sur le lit selon le rayon de courbure du lit et pouvant également être bombées dans la direction transversale à la précédente en fonction de la forme choisie pour les éléments d'avancement, les feuilles prenant progressivement leur forme en entrant dans le lit de conformation et sur une première zone dite de mise en forme, puis étant durcies par trempe ou refroidissement dans une seconde zone du lit de conformation jusqu'à leur sortie, puis on récupère les feuilles de verre bombées ainsi obtenues, caractérisé par le fait que l'on constitue un lit de conformation dont le profil s'étend suivant un arc de cercle de plus de 90° et que l'on assure le déplacement des feuilles de verre durcies à la sortie du lit de conformation dans une direction opposée à celle dans laquelle elles y ont été amenées.

De préférence, on amène les feuilles de verre horizontalement au lit de conformation, et on les achemine également horizontalement à la sortie du lit de conformation.

Selon une première variante, on fait défiler les feuilles de verre suivant une trajectoire plane dans un four de réchauffage pour les amener à température de ramollissement, puis suivant la trajectoire courbe du lit de conformation, tangente à la trajectoire plane précitée.

Selon une deuxième variante, on pratique un bombage préalable par effondrement des feuilles de verre amenées à leur température de ramollissement avant de les faire défiler sur le lit de conformation.

Conformément à un premier mode de réalisation du procédé selon la présente invention, on fait défiler les feuilles de verre sur le lit de conformation selon un trajet ascendant, des contre-rouleaux étant associés aux éléments de déplacement du lit de conformation dans toute zone de ce dernier où un maintien des feuilles est nécessaire, et on provoque le retournement de chaque feuille de verre durcie à sa libération de la dernière paire de rouleau/contre-rouleau associé du lit de conformation, les feuilles ainsi retournées étant reçues par un tapis roulant, puis reprises par un convoyeur à rouleaux en vue de leur transfert vers la sortie.

On peut alors provoquer le retournement d'une feuille de verre durcie en l'amenant, dès sa libération, à être projetée sous l'effet de sa vitesse pour venir en butée par sa bordure inférieure d'extrémité avant contre la partie supérieure d'un rouleau monté fou, d'axe parallèle à celui des éléments de déplacement du lit de conformation, la feuille de verre durcie basculant alors autour de cette ligne de contact avec le rouleau fou sous l'effet de son poids pour tomber à l'état retourné sur le tapis roulant de réception.

On peut également provoquer le retournement d'une feuille de verre durcie en l'amenant, dès sa libération, à être projetée sous l'effet de sa vitesse pour venir s'appliquer par sa face inférieure sur un rouleau, de préférence monté fou, d'axe parallèle à celui des éléments de déplacement du lit de conformation, en soufflant de l'air sous la feuille dans la région située en amont de sa ligne de contact avec ledit rouleau, afin de provoquer le basculement autour dudit rouleau de ladite feuille de verre durcie pour retomber à l'état retourné sur le tapis roulant de réception.

Conformément à un second mode de réalisation du procédé selon la présente invention, on fait défiler les feuilles de verre sur le lit de conformation selon un trajet descendant, des contre-rouleaux étant associés aux éléments de déplacement du lit de conformation dans toute zone de ce dernier où un maintien des feuilles est nécessaire, et on récupère les feuilles de verre durcies à la sortie du lit de conformation par simple dépôt sur un tapis roulant puis reprise sur un convoyeur à rouleaux ou par dépôt direct sur un convoyeur à rouleaux en vue de leur transfert vers la sortie.

Dans le premier mode de réalisation précité et le cas échéant dans le second mode de réalisation précité, on utilise avantageusement des tapis roulants perforés ou à courroies afin de permettre un refroidissement par soufflage d'air par le dessous sur la face inférieure des feuilles de verre transportées.

On peut choisir les éléments d'avancement du lit de conformation parmi les tiges présentant un axe de symétrie, telles que les tiges cylindriques, coniques et en forme de diabolo-tonneau, et tournant sur elles-mêmes, et les éléments contrefléchis ou cintrés qui sont entourés de gaines tubulaires tournantes, les formes desdits éléments d'avancement pouvant évoluer le long de la zone de mise en forme du lit de conformation.

Tous ces types d'éléments d'avancement du lit de conformation ont été décrits dans la littérature - brevets. On peut ainsi mentionner les brevets européens EP-143 691 et EP-148 043 décrivant des rouleaux cintrés, en forme de guidon, EP-413 619, des éléments contrefléchis, EP-415 826, des rouleaux de type diabolo-tonneau, EP-474 531, des rouleaux coniques.

On effectue avantageusement le bombage avec un rayon de courbure du lit de conformation, c'est-à-dire d'une ligne parallèle au sens de défilement, de 1 à 2 mètres, et un rayon de courbure d'une ligne perpendiculaire au sens de défilement de 5 mètres à l'infini.

Avantageusement, on fait défiler des feuilles de verre qui ont pris leur forme à une température de 600 à 700°C.

Pour durcir les feuilles de verre bombées, on leur fait subir la trempe dans la zone de trempe du lit de conformation en adressant de l'air à une pression de 0,98 x 10⁴ Pa à 2,94 x 10⁴ Pa (1 000 à 3 000 mm de colonne d'eau).

Conformément à une possibilité telle que décrite dans la demande de brevet français 02 12577 au nom de la Société déposante déposée le 10 octobre 2002, on effectue un soufflage d'air en continu sur au moins une face des feuilles de verre ayant commencé leur mise en forme et avant qu'elles ne pénètrent dans la zone de refroidissement ou de trempe, dans des conditions capables d'influencer de façon dissymétrique la concavité finale des feuilles de verre bombées par rapport à ce qu'aurait donné le bombage final sans ledit soufflage.

Le procédé selon l'invention permet de réaliser le bombage de feuilles de verre d'une épaisseur notamment de 1 à 6 mm.

On peut régler la distance entre les feuilles de verre sur le lit de conformation à une valeur de 2 à 20 cm.

On peut obtenir des feuilles de verre bombées durcies à une cadence d'au moins une feuille toutes les 4 secondes, en particulier d'une feuille par seconde.

La présente invention a également pour objet une machine de bombage de feuilles de verre comportant des moyens pour faire défiler des feuilles de verre qui ont été au préalable amenées à leur température de ramollissement, sur un lit de conformation constitué par des éléments permettant leur avancement, disposés selon un trajet à profil en arc de cercle, caractérisée par le fait que le lit de conformation s'étend sur un arc de cercle de plus de 90°, et que des moyens sont prévus pour reprendre les feuilles de verre bombées à la sortie dudit lit de conformation dans une direction opposée à celle dans laquelle elles y ont été amenées.

Dans le cas où le défilement des feuilles de verre est prévu ascendant, les moyens de reprise des feuilles de verre comportent des moyens de retournement de celles-ci avant leur récupération sur un tapis roulant.

Conformément à une première variante, les moyens de retournement consistent en un rouleau monté fou d'axe parallèle à celui des éléments de déplacement du lit de conformation, disposé à une hauteur telle que les feuilles de verre éjectées du lit de conformation viennent en butée par leur bordure inférieure d'extrémité avant contre la partie supérieure dudit rouleau.

Conformément à une seconde variante, les moyens de retournement consistent en un rouleau, de préférence monté fou, d'axe parallèle à celui des éléments de déplacement du lit de conformation, disposé à une hauteur telle que les feuilles de verre éjectées du lit de conformation viennent s'appliquer par leur face inférieure sur ledit rouleau, des moyens étant prévus, tels que des moyens de soufflage d'air, pour provoquer le basculement de la feuille de verre durcie autour dudit rouleau.

Dans le cas où le défilement des feuilles de verre est prévu descendant, les moyens de reprise des feuilles de verre consistent en des moyens de récupération par tapis roulant ou convoyeur à rouleaux.

Les tapis roulants sont avantageusement des tapis roulants perforés ou à courroies.

Les éléments d'avancement du lit de conformation peuvent être de tous types, des exemples étant mentionnés ci-dessus.

Des contre-rouleaux sont avantageusement associés aux éléments d'avancement du lit de conformation dans toute zone de celui-ci où un maintien des feuilles de verre est requis.

Par ailleurs, la machine selon l'invention comporte avantageusement des moyens de trempe ou de refroidissement des feuilles de verre une fois leur mise en forme effectuée, lesdits moyens consistant notamment en caissons de soufflage de trempe comportant chacun des buses disposées en barrettes et dirigées entre deux éléments de déplacement voisins du lit de conformation.

De tels caissons de soufflage sont décrits dans la demande internationale WO 99/12855.

La machine selon l'invention peut comporter en outre au moins une buse de soufflage d'air en continu, disposée en un emplacement de la ligne de défilement des feuilles après que les feuilles aient commencé leur mise en forme et avant qu'elles ne pénètrent dans la zone de refroidissement ou de trempe, la ou les buses étant disposées pour réaliser un soufflage d'air dissymétrique sur lesdites feuilles, et réglées pour que le soufflage d'air influence la concavité finale des feuilles de verre bombées par rapport à ce qu'aurait donné le bombage final sans ledit soufflage.

Pour mieux illustrer le procédé et la machine selon la présente invention, on va maintenant en décrire à titre indicatif et non limitatif, plusieurs modes de réalisation particuliers avec référence au dessin annexé sur lequel .
- la Figure 1 est une représentation schématique vue de côté d'une machine de bombage/trempe selon un état antérieur de la technique, dans laquelle une feuille de verre défile dans un four de réchauffage, puis dans un lit de conformation ascendant, puis, en sortie, dans une zone de refroidissement secondaire ;
- la Figure 2 est une représentation schématique vue de côté d'une machine de bombage/trempe selon un premier mode de réalisation de l'invention, dans laquelle une feuille de verre défile dans un lit de conformation ascendant ;
- les Figures 3 à 7 sont des représentations schématiques de la trajectoire de la feuille de verre bombée à la sortie du lit de conformation ascendant selon une première variante de ce premier mode de réalisation de l'invention ;
- les Figures 8 à 11 sont des représentations schématiques de la trajectoire de la feuille de verre bombée à la sortie de lit de conformation ascendant selon une seconde variante de ce premier mode de réalisation ;
- la Figure 12 est une représentation schématique vue de côté d'une machine de bombage/trempe selon un second mode de réalisation de l'invention, dans laquelle une feuille de verre défile dans un lit de conformation descendant.

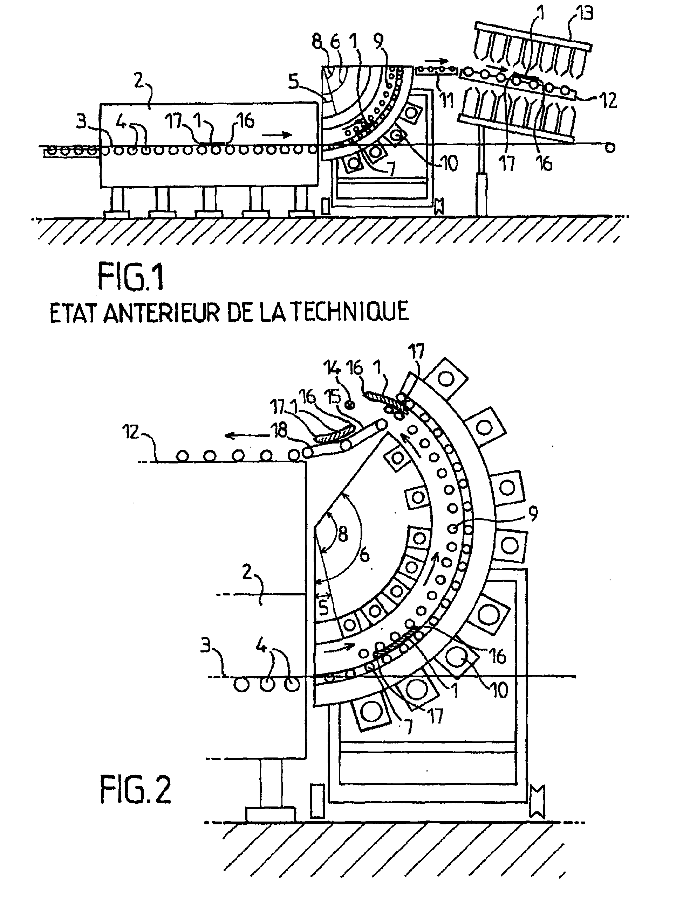

Sur la Figure 1, on a représenté le cheminement d'une feuille de verre dans une installation pour son bombage selon l'état antérieur de la technique.

La feuille de verre 1 traverse en premier lieu une zone de réchauffage 2, dans laquelle elle est véhiculée sur un convoyeur horizontal 3 constitué par une série de rouleaux moteurs 4. A la sortie de la zone de réchauffage 2, la température de la feuille de verre 1 est supérieure ou égale à sa température de bombage.

La feuille de verre 1 pénètre alors dans la zone de mise en forme 5 du lit de conformation 6 dans lequel des rouleaux 7 sont montés longitudinalement selon un profil en arc de cercle. Les rouleaux 7 forment ainsi un lit de conformation ascendant qui achemine la feuille de verre 1 dans le même sens que le convoyeur 3. Les feuilles de verre 1 acquièrent dans la zone de conformation 5 une courbure selon le rayon de courbure du lit de conformation obtenue sous l'action de la gravité, éventuellement de contre-rouleaux supérieurs, de leur vitesse ou bien d'une combinaison de ces facteurs.

La zone de mise en forme 5 est suivie d'une zone de trempe ou de refroidissement 8 dans laquelle les feuilles de verre 1 sont amenées à durcir. Les rouleaux 7 y sont disposés selon le même profil en arc de cercle. Des contre-rouleaux 9 sont prévus pour maintenir les feuilles de verre 1. Les organes de trempe ou de refroidissement sont constitués par des caissons de soufflage 10 disposés de part et d'autre des rouleaux 7 et contre-rouleaux 9 agissant ainsi sur les deux faces de la feuille de verre 1 de telle sorte qu'en passant entre les caissons 10 et suivant la pression de soufflage choisie, la feuille de verre 1 bombée, en fonction de son épaisseur, est soit trempée, soit simplement durcie en position bombée.

En quittant le lit de conformation 6, la feuille de verre 1 bombée est pincée par les deux dernières paires de rouleaux 7 et contre-rouleaux 9 et bascule sur un convoyeur 11, lequel transporte les feuilles de verre dans le même sens que le convoyeur 3 de la zone de réchauffage 2.

La feuille de verre 1 est ensuite évacuée par un convoyeur plan 12 qui traverse une zone de refroidissement secondaire 13.

Sur la Figure 2, on a représenté le cheminement d'une feuille de verre dans une installation pour le bombage selon un premier mode de réalisation de la présente invention.

La feuille de verre 1 quittant la zone de réchauffage 2 entre dans la zone de mise en forme 5 puis dans la zone de trempe ou de refroidissement 8. Le lit de conformation 6 forme un arc de cercle de plus de 90°, permettant ainsi une plus grande zone de mise en forme 5 par conséquent de meilleures propriétés optiques du verre et/ou une plus grande zone de refroidissement ou de trempe 8, d'où une trempe correcte de la feuille de verre 1.

A la sortie de la zone de trempe 8, la feuille de verre durcie est retournée en venant en butée contre le rouleau 14 monté fou d'axe parallèle aux rouleaux 7 et contre-rouleaux 9 et en basculant autour dudit rouleau 14 pour tomber sur le tapis roulant de réception 15.

La distance entre le point de contact de la feuille sur le rouleau 14 et le centre du cercle du lit de conformation est donc inférieure, ou tout au plus égale, à la distance entre le point de contact de la feuille de verre sur un contre-rouleau 9 et le centre du cercle précité.

La feuille de verre 1 est ensuite acheminée par le convoyeur 12, lequel la transporte dans la direction opposée à celle du convoyeur 3 et sur lequel la feuille de verre 1 poursuit son refroidissement.

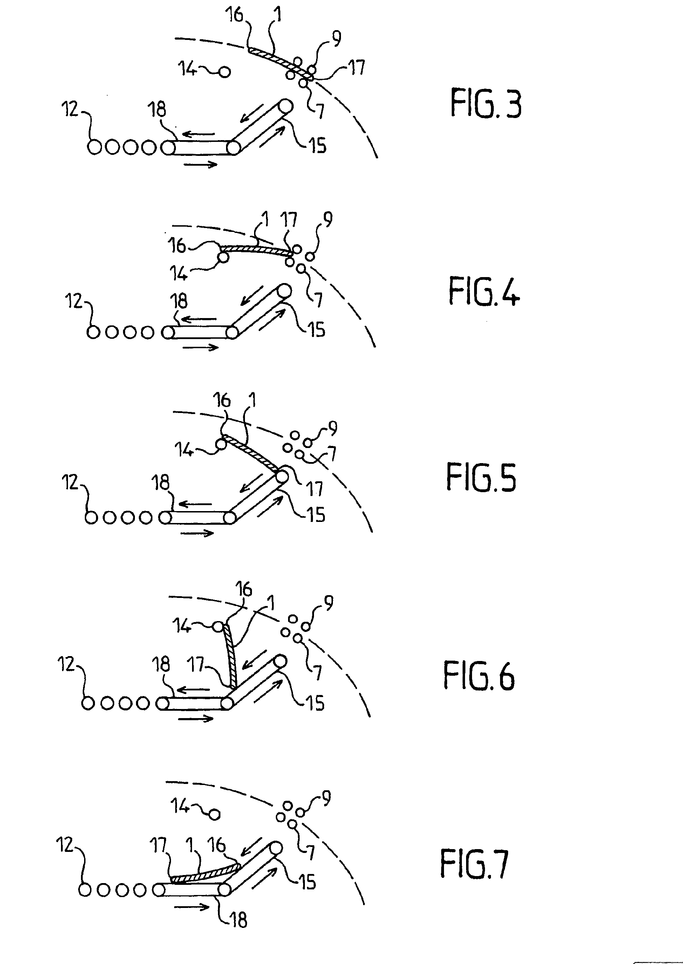

Sur les Figures 3 à 7 on a représenté les différentes étapes du basculement de la feuille de verre 1 selon le mode de réalisation de l'invention représenté sur la Figure 2.

La feuille de verre 1 sortant du lit de conformation est maintenue par les deux dernières paires de rouleaux 7 et contre-rouleaux 9 en restant dans le prolongement du lit de conformation 6 (Figure 3).

Puis, la feuille de verre 1 est projetée sous l'effet de sa vitesse et la bordure inférieure de son extrémité avant 16 vient en butée contre la partie supérieure du rouleau 14 (Figure 4).

L'extrémité arrière 17 de la feuille de verre 1 tombe sous l'effet de son poids sur le tapis roulant 15 qui l'amène à passer sous le rouleau 14 (Figures 5 et 6).

Lorsque l'extrémité arrière 17 passe sous l'extrémité avant 16, la feuille de verre 1 bascule et tombe à l'état retourné pour se trouver acheminée par le tapis roulant 15 de réception, puis par un tapis roulant de reprise 18 vers le convoyeur 12 (Figure 7). L'extrémité arrière 17 se retrouve alors à l'avant de la feuille 1 sur le convoyeur 12.

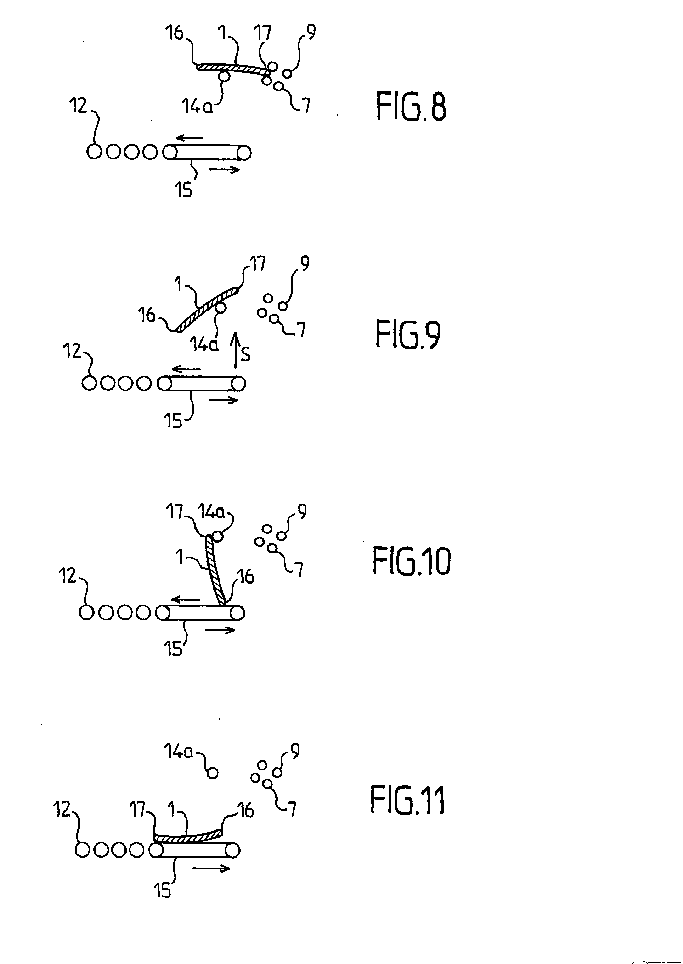

Selon une autre variante, la feuille de verre 1 sortant du lit de conformation ascendant est amenée à basculer autour du rouleau 14a comme cela est représenté sur les Figures 8 à 11.

A la sortie des derniers rouleaux 7 et contre-rouleaux 9, la feuille de verre est projetée sous l'effet de sa vitesse et tombe sur le rouleau 14a (Figure 8).

Par une soufflerie exerçant un souffle S de bas en haut sur la feuille 1 dans la région située en amont de sa ligne de contact avec le rouleau 14a, l'extrémité arrière 17 est soulevée alors que l'extrémité avant 16 descend et entraîne la feuille de verre 1 à basculer autour du rouleau 14a (Figure 9). Lorsque l'extrémité avant 16 passe en dessous de l'extrémité arrière 17 (Figure 10), la feuille de verre 1 tombe à l'état retourné sur le tapis roulant 15 et est entraînée sur le convoyeur 12.

L'extrémité avant 16 se trouve alors à l'arrière de la feuille 1 sur le convoyeur 12.

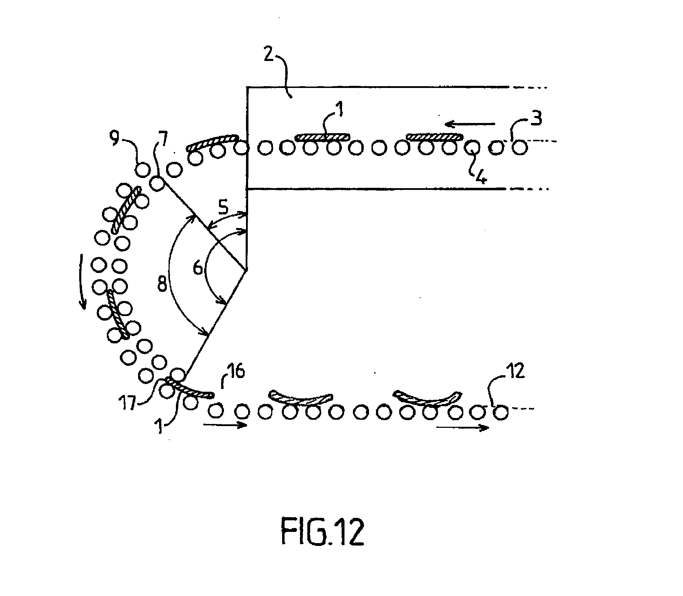

La Figure 12 représente de façon schématique le cheminement d'une feuille de verre 1 dans une machine de bombage dont le lit de conformation a un profil circulaire descendant.

Sur cette figure, on peut voir que la feuille de verre 1 sortant du lit de conformation 6 vient se poser directement sur le convoyeur 12 lequel le transporte dans une direction opposée à celle du convoyeur 3 située à l'entrée du lit de conformation.

De même que pour la machine de bombage selon l'invention ayant un lit de conformation ascendant, le lit de conformation descendant se déroule sur un arc de cercle de plus de 90°, permettant ainsi une plus grande zone de mise en forme 5, d'où de meilleures propriétés optiques et/ou une plus grande zone de trempe 8, pour une trempe correctement assurée, sans abîmer la feuille de verre par un pinçage.

## Revendications

1. - Procédé de fabrication de feuilles de verre bombées, suivant lequel on amène des feuilles de verre (1) à leur température de ramollissement, puis on les fait défiler sur un lit de conformation (6) constitué par des éléments (7) permettant leur avancement, disposés selon un trajet à profil en arc de cercle, les feuilles étant bombées dans leur direction d'avancement sur le lit selon le rayon de courbure du lit et pouvant également être bombées dans la direction transversale à la précédente en fonction de la forme choisie pour les éléments d'avancement, les feuilles prenant progressivement leur forme en entrant dans le lit de conformation (6) et sur une première zone (5) dite de mise en forme, puis étant durcies par trempe ou refroidissement dans une seconde zone (8) du lit de conformation (6) jusqu'à leur sortie, puis on récupère les feuilles de verre bombées ainsi obtenues, **caractérisé par le fait que** l'on constitue un lit de conformation (6) dont le profil s'étend suivant un arc de cercle de plus de 90° et que l'on assure le déplacement des feuilles de verre (1) durcies à la sortie du lit de conformation (6) dans une direction opposée à celle dans laquelle elles y ont été amenées.

2. - Procédé selon la revendication 1, **caractérisé par le fait que** l'on amène les feuilles de verre (1) horizontalement au lit de conformation (6), et qu'on les achemine également horizontalement à la sortie du lit de conformation (6).

3. - Procédé selon l'une des revendications 1 et 2, **caractérisé par le fait que** l'on fait défiler les feuilles de verre (1) suivant une trajectoire plane dans un four de réchauffage (2) pour les amener à température de ramollissement, puis suivant la trajectoire courbe du lit de conformation (6), tangente à la trajectoire plane précitée.

4. - Procédé selon l'une des revendications 1 et 2, **caractérisé par le fait que** l'on pratique un bombage préalable par effondrement des feuilles de verre (1) amenées à leur température de ramollissement avant de les faire défiler sur le lit de conformation (6).

5. - Procédé selon l'une des revendications 1 à 4, **caractérisé par le fait que** l'on fait défiler les feuilles de verre (1) sur le lit de conformation (6) selon un trajet ascendant, des contre-rouleaux (9) étant associés aux éléments de déplacement (7) du lit de conformation (6) dans toute zone de ce dernier où un maintien des feuilles (1) est nécessaire, et que l'on provoque le retournement de chaque feuille de verre (1) durcie à sa libération de la dernière paire de rouleau (7)/contre-rouleau (9) associé du lit de conformation (6), les feuilles (1) ainsi retournées étant reçues par un tapis roulant (15), puis reprises par un convoyeur à rouleaux (12) en vue de leur transfert vers la sortie.

6. - Procédé selon la revendication 5, **caractérisé par le fait que** l'on provoque le retournement d'une feuille de verre (1) durcie en l'amenant, dès sa libération, à être projetée sous l'effet de sa vitesse pour venir en butée par sa bordure inférieure d'extrémité avant (16) contre la partie supérieure d'un rouleau (14) monté fou d'axe parallèle à celui des éléments de déplacement (7) du lit de conformation (6), la feuille de verre (1) durcie basculant alors autour de cette ligne de contact avec le rouleau fou (14) sous l'effet de son poids pour tomber à l'état retourné sur le tapis roulant de réception (15).

7. - Procédé selon la revendication 5, **caractérisé par le fait que** l'on provoque le retournement d'une feuille de verre (1) durcie en l'amenant, dès sa libération, à être projetée sous l'effet de sa vitesse pour venir s'appliquer par sa face inférieure sur un rouleau (14a), de préférence monté fou, d'axe parallèle à celui des éléments de déplacement (7) du lit de conformation (6), en soufflant de l'air sous la feuille (1) dans la région située en amont de sa ligne de contact avec ledit rouleau (14a), afin de provoquer le basculement autour dudit rouleau (14a) de ladite feuille de verre (1) durcie pour retomber à l'état retourné sur le tapis roulant de réception (15).

8. - Procédé selon l'une des revendications 1 à 4, **caractérisé par le fait que** l'on fait défiler les feuilles de verre (1) sur le lit de conformation (6) selon un trajet descendant, des contre-rouleaux (9) étant associés aux éléments de déplacement (7) du lit de conformation (6) dans toute zone de ce dernier où un maintien des feuilles (1) est nécessaire, et que l'on récupère les feuilles de verre (1) durcies à la sortie du lit de conformation (6) par simple dépôt sur un tapis roulant puis reprise sur un convoyeur à rouleaux (12) ou par dépôt direct sur un convoyeur à rouleaux en vue de leur transfert vers la sortie.

9. - Procédé selon l'une des revendications 5 à 8, **caractérisé par le fait que** l'on utilise des tapis roulants (15) perforés ou à courroies afin de permettre un refroidissement par soufflage d'air par le dessous sur la face inférieure des feuilles de verre (1) transportées.

10. - Procédé selon l'une des revendications 1 à 9, **caractérisé par le fait que** l'on choisit les éléments d'avancement (7) du lit de conformation (6) parmi les tiges présentant un axe de symétrie, telles que les tiges cylindriques, coniques et en forme de diabolo-tonneau, et tournant sur elles-mêmes, et les éléments contrefléchis ou cintrés qui sont entourés de gaines tubulaires tournantes, les formes desdits éléments d'avancement pouvant évoluer le long de la zone de mise en forme du lit de conformation (6).

11. - Procédé selon l'une des revendications 1 à 10, **caractérisé par le fait que** l'on effectue le bombage avec un rayon de courbure du lit de conformation (6), c'est-à-dire d'une ligne parallèle au sens de défilement, de 1 à 2 mètres, et un rayon de courbure d'une ligne perpendiculaire au sens de défilement de 5 mètres à l'infini.

12. - Procédé selon l'une des revendications 1 à 11, **caractérisé par le fait que** l'on fait défiler des feuilles de verre (1) qui ont pris leur forme à une température de 600 à 700°C.

13. - Procédé selon l'une des revendications 1 à 12, **caractérisé par le fait que** l'on fait subir la trempe aux feuilles de verre (1) dans la zone de trempe (8) du lit de conformation (6) en adressant de l'air à une pression de 0,98 x 10⁴ Pa à 2,94 x 10⁴ Pa (1 000 à 3 000 mm de colonne d'eau).

14. - Procédé selon l'une des revendications 1 à 13, **caractérisé par le fait que** l'on effectue un soufflage d'air en continu sur au moins une face des feuilles de verre ayant commencé leur mise en forme et avant qu'elles ne pénètrent dans la zone de refroidissement ou de trempe (8), dans des conditions capables d'influencer de façon dissymétrique la concavité finale des feuilles de verre (1) bombées par rapport à ce qu'aurait donné le bombage final sans ledit soufflage.

15. - Procédé selon l'une des revendications 1 à 14, **caractérisé par le fait que** l'on réalise le bombage de feuilles de verre (1) d'une épaisseur de 1 à 6 mm.

16. - Procédé selon l'une des revendications 1 à 15, **caractérisé par le fait que** l'on règle la distance entre les feuilles de verre (1) sur le lit de conformation (6) à une valeur de 2 à 20 cm.

17. - Procédé selon l'une des revendications 1 à 16, **caractérisé par le fait que** l'on obtient les feuilles de verre (1) bombées durcies à une cadence d'au moins une feuille toutes les 4 secondes, en particulier d'une feuille par seconde.

18. - Machine de bombage de feuilles de verre comportant des moyens pour faire défiler des feuilles de verre qui ont été au préalable amenées à leur température de ramollissement, sur un lit de conformation (6) constitué par des éléments (7) permettant leur avancement, disposés selon un trajet à profil en arc de cercle, **caractérisée par le fait que** le lit de conformation (6) s'étend sur un arc de cercle de plus de 90°, et que des moyens sont prévus pour reprendre les feuilles de verre (1) bombées à la sortie dudit lit de conformation (6) dans une direction opposée à celle dans laquelle elles y ont été amenées.

19. - Machine selon la revendication 18, dans laquelle le défilement des feuilles de verre (1) est prévu ascendant, **caractérisée par le fait que** les moyens de reprise des feuilles de verre (1) comportent des moyens (14 ; 14a) de retournement de celles-ci avant leur récupération sur un tapis roulant (15).

20. - Machine selon la revendication 19, **caractérisée par le fait que** les moyens de retournement consistent en un rouleau (14) monté fou d'axe parallèle à celui des éléments de déplacement (7) du lit de conformation (6), disposé à une hauteur telle que les feuilles de verre (1) éjectées du lit de conformation (6) viennent en butée par leur bordure inférieure d'extrémité avant (16) contre la partie supérieure dudit rouleau (14).

21. - Machine selon la revendication 19, **caractérisée par le fait que** les moyens de retournement consistent en un rouleau (14a), de préférence monté fou, d'axe parallèle à celui des éléments de déplacement (7) du lit de conformation (6), disposé à une hauteur telle que les feuilles de verre (1) éjectées du lit de conformation (6) viennent s'appliquer par leur face inférieure sur ledit rouleau (14a), des moyens étant prévus, tels que des moyens de soufflage d'air, pour provoquer le basculement de la feuille de verre (1) durcie autour dudit rouleau (14a).

22. - Machine selon la revendication 18, dans laquelle le défilement des feuilles de verre est prévu descendant, **caractérisé par le fait que** les moyens de reprise des feuilles de verre consistent en des moyens de récupération par tapis roulant ou convoyeur à rouleaux (12).

23. - Machine selon l'une des revendications 19 à 22, **caractérisée par le fait que** les tapis roulants (12) sont des tapis roulants perforés ou à courroies.

24. - Machine selon l'une des revendications 18 à 23, **caractérisée par le fait que** les éléments d'avancement (7) du lit de conformation (6) sont choisis parmi les tiges présentant un axe de symétrie, telles que les tiges cylindriques, coniques et en forme de diabolo-tonneau, et tournant sur elles-mêmes, et les éléments contrefléchis ou cintrés qui sont entourés de gaines tubulaires tournantes, les formes desdits éléments d'avancement (7) pouvant évoluer le long de la zone de mise en forme (15) du lit de conformation (6).

25. - Machine selon l'une des revendications 18 à 24, **caractérisée par le fait que** des contre-rouleaux (9) sont associés aux éléments d'avancement (7) du lit de conformation (6) dans toute zone de celui-ci où un maintien des feuilles de verre (1) est requis.

26. - Machine selon l'une des revendications 18 à 25, **caractérisée par le fait qu'**elle comporte des moyens (9) de trempe ou de refroidissement des feuilles de verre une fois leur mise en forme effectuée, lesdits moyens consistant notamment en caissons de soufflage de trempe comportant chacun des buses disposées en barrettes et dirigées entre deux éléments de déplacement voisins (7) du lit de conformation (6).

27. - Machine selon l'une des revendications 18 à 26, **caractérisée par le fait qu'**elle comporte en outre au moins une buse de soufflage d'air en continu, disposée en un emplacement de la ligne de défilement des feuilles (1) après que les feuilles (1) aient commencé leur mise en forme et avant qu'elles ne pénètrent dans la zone de refroidissement ou de trempe (8), la ou les buses étant disposées pour réaliser un soufflage d'air dissymétrique sur lesdites feuilles (1), et réglées pour que le soufflage d'air influence la concavité finale des feuilles de verre (1) bombées par rapport à ce qu'aurait donné le bombage final sans ledit soufflage.

## Claims

1. A method of manufacturing bent glass sheets, in which glass sheets (1) are brought to their softening temperature, then they are caused to travel over a shaping bed (6) consisting of elements (7) for advancing them which are arranged along a path having a circular arc-shaped profile, the sheets being bent in their direction of advance over the bed according to the radius of curvature of the bed and also being able to be bent in the direction transverse to the preceding direction depending on the shape chosen for the advancing elements, the sheets progressively assuming their shape on entering the shaping bed (6) and over a first zone (5), termed shaping zone, then being hardened by tempering or cooling in a second zone (8) of the shaping bed (6) until they leave, and then the bent glass sheets thus obtained are recovered, **characterized in that** a shaping bed (6) is produced with a profile extending in a circular arc of more than 90° and **in that**, on leaving the shaping bed (6), the hardened glass sheets (1) are moved in a direction opposite that in which they were fed in.

2. The method as claimed in claim 1, **characterized in that** the glass sheets (1) are brought horizontally to the shaping bed (6), and **in that** they are also conveyed horizontally on leaving the shaping bed (6).

3. The method as claimed in either of claims 1 and 2, **characterized in that** the glass sheets (1) are caused to travel along a flat trajectory in a heating furnace (2) so as to bring them to the softening temperature, then along the curved trajectory of the shaping bed (6), tangential to the aforementioned flat trajectory.

4. The method as claimed in either of claims 1 and 2, **characterized in that** a prior bending operation is carried out by sagging the glass sheets (1) brought to their softening temperature before causing them to travel over the shaping bed (6).

5. The method as claimed in one of claims 1 to 4, **characterized in that** the glass sheets (1) are caused to travel over the shaping bed (6) along an ascending path, backing rollers (9) being associated with the forwarding elements (7) of the shaping bed (6) in every zone thereof in which the sheets (1) need to be retained, and **in that** each hardened glass sheet (1) is overturned on release from the last roller (7)/backing roller (9) pair associated with the shaping bed (6), the sheets (1) thus overturned being received by a conveyor belt (15) and then taken over by a roller conveyor (12) with the aim of transferring them toward the exit point.

6. The method as claimed in claim 5, **characterized in that** a hardened glass sheet (1) is overturned by causing it, on its release, to be projected under the effect of its speed so that it strikes, by way of its front lower end edge (16), against the upper part of an idle roller (14) whose axis is parallel to that of the forwarding elements (7) of the shaping bed (6), the hardened glass sheet (1) then tilting about this line of contact with the idle roller (14) under the effect of its weight so that it to drops onto the reception conveyor belt (15) in the overturned state.

7. The method as claimed in claim 5, **characterized in that** a hardened glass sheet (1) is overturned by causing it, on its release, to be projected under the effect of its speed so that is applied, by way of its lower face, to a roller (14a), preferably an idle roller, whose axis is parallel to that of the forwarding elements (7) of the shaping bed (6), by blowing air under the sheet (1) in the region situated upstream of its line of contact with said roller (14a), in order to tilt said hardened glass sheet (1) about said roller (14a) so that it drops down onto the reception conveyor belt (15) in the overturned state.

8. The method as claimed in one of claims 1 to 4, **characterized in that** the glass sheets (1) are caused to travel over the shaping bed (6) along a descending path, backing rollers (9) being associated with the forwarding elements (7) of the shaping bed (6) in every zone thereof in which the sheets (1) need to be retained, and **in that** the hardened glass sheets (1) are recovered on leaving the shaping bed (6) by being simply deposited on a conveyor belt and then taken over on a roller conveyor (12) or by being directly deposited on a roller conveyor with the aim of transferring them toward the exit point.

9. The method as claimed in one of claims 5 to 8, **characterized in that** perforated or multi-strap conveyor belts (15) are used so as to allow cooling by blowing in air from underneath onto the lower face of the transported glass sheets (1).

10. The method as claimed in one of claims 1 to 9, **characterized in that** the advancing elements (7) of the shaping bed (6) are chosen from among rods having an axis of symmetry, such as cylindrical, conical and waisted/barreled rods, and rotating on themselves, and cambered or curved elements which are surrounded by rotating tubular sleeves, the shapes of said advancing elements being able to change along the shaping zone of the shaping bed (6).

11. The method as claimed in one of claims 1 to 10, **characterized in that** the bending operation is carried out with a radius of curvature of the shaping bed (6), that is to say of a line parallel to the direction of travel, of 1 to 2 meters, and a radius of curvature of a line perpendicular to the direction of travel of 5 meters to infinity.

12. The method according to one of claims 1 to 11, **characterized in that** glass sheets (1) which have assumed their shape at a temperature of 600 to 700°C are caused to travel.

13. The method as claimed in one of claims 1 to 12, **characterized in that** the glass sheets (1) are subjected to tempering in the tempering zone (8) of the shaping bed (6) by exposing them to air at a pressure of 0.98 x 10⁴ Pa to 2.94 x 10⁴ Pa (1000 to 3000 mm water column).

14. The method as claimed in one of claims 1 to 13, **characterized in that** air is blown in continuously over at least one face of the glass sheets having begun to be shaped and before they enter the cooling or tempering zone (8), under conditions capable of asymmetrically influencing the final concavity of the bent glass sheets (1) by comparison with the concavity that the final bending would have given without said blowing.

15. The method as claimed in one of claims 1 to 14, **characterized in that** the bending operation is carried out on glass sheets (1) having a thickness of 1 to 6 mm.

16. The method as claimed in one of claims 1 to 15, **characterized in that** the distance between the glass sheets (1) on the shaping bed (6) is adjusted to a value of 2 to 20 cm.

17. The method as claimed in one of claims 1 to 16, **characterized in that** the hardened bent glass sheets (1) are obtained at a rate of at least one sheet every four seconds, in particular of one sheet per second.

18. A machine for bending glass sheets comprising means for causing glass sheets which have been brought to their softening temperature beforehand to travel over a shaping bed (6) consisting of elements (7) for advancing them which are arranged along a path having a circular arc-shaped profile, **characterized in that** the shaping bed (6) extends over a circular arc of more than 90°, and **in that** means are provided for taking over the bent glass sheets (1), on leaving said shaping bed (6), in a direction opposite that in which they were fed in.

19. The machine as claimed in claim 18, in which the path of travel of the glass sheets (1) is designed to be ascending, **characterized in that** the means for taking over the glass sheets (1) comprise means (14; 14a) for overturning the latter before they are recovered on a conveyor belt (15).

20. The machine as claimed in claim 19, **characterized in that** the overturning means consist of an idle roller (14) whose axis is parallel to that of the forwarding elements (7) of the shaping bed (6), arranged at a height such that the glass sheets (1) ejected from the shaping bed (6) strike, by way of their front lower end edge (16), against the upper part of said roller (14).

21. The machine as claimed in claim 19, **characterized in that** the overturning means consist of a roller (14a), preferably an idle roller, whose axis is parallel to that of the forwarding elements (7) of the shaping bed (6), arranged at a height such that the glass sheets (1) ejected from the shaping bed (6) are applied to said roller (14a) by way of their lower face, means being provided, such as air-blowing means, to tilt the hardened glass sheet (1) about said roller (14a) .

22. The machine as claimed in claim 18, in which the path of travel of the glass sheets is designed to be descending, **characterized in that** the means for taking over the glass sheets consist of recovery means in the form of a conveyor belt or roller conveyor (12).

23. The machine as claimed in one of claims 19 to 22, **characterized in that** the conveyor belts (12) are perforated or multi-strap conveyor belts.

24. The machine as claimed in one of claims 18 to 23, **characterized in that** the advancing elements (7) of the shaping bed (6) are chosen from among rods having an axis of symmetry, such as cylindrical, conical and waisted/barreled rods, and rotating on themselves, and cambered or curved elements which are surrounded by rotating tubular sleeves, the shapes of said advancing elements (7) being able to change along the shaping zone (15) of the shaping bed (6).

25. The machine as claimed in one of claims 18 to 24, **characterized in that** backing rollers (9) are associated with the advancing elements (7) of the shaping bed (6) in every zone thereof in which there is a requirement to retain the glass sheets (1).

26. The machine as claimed in one of claims 18 to 25, **characterized in that** it comprises means (9) for tempering or cooling the glass sheets once they have been shaped, said means consisting particularly of tempering blow-boxes each comprising nozzles arranged in arrays and directed between two adjacent forwarding elements (7) of the shaping bed (6).

27. The machine as claimed in one of claims 18 to 26, **characterized in that** it additionally comprises at least one nozzle for continuously blowing in air, arranged at a point on the line of travel of the sheets (1) after the sheets (1) have begun to be shaped and before they enter the cooling or tempering zone (8), the nozzle or nozzles being arranged so that air is blown asymmetrically onto said sheets (1) and adjusted so that the blowing of air influences the final concavity of the bent glass sheets (1) by comparison with the concavity that the final bending would have given without said blowing.

## Patentansprüche

1. Verfahren zur Herstellung gebogener Glasscheiben, gemäß welchem Glasscheiben (1) auf Erweichungstemperatur gebracht und anschließend über ein Formgebungsbett (6) laufen gelassen werden, das von Elementen (7) gebildet wird, die ihre Vorwärtsbewegung erlauben und in einer Bahn mit kreisbogenförmigem Profil angeordnet sind, wobei die Glasscheiben in Durchlaufrichtung auf dem Bett gemäß dem Krümmungsradius des Betts gebogen werden und ebenfalls in der Querrichtung zu der vorhergehenden in Abhängigkeit von der Form gebogen werden können, die für die Förderelemente gewählt worden ist, die Glasscheiben fortschreitend ihre Form annehmen, nachdem sie auf das Formgebungsbett (6) und auf einen ersten Formgebungsbereich (5) gelangt sind, anschließend durch Vorspannen oder Abkühlen in einem zweiten Bereich (8) des Formgebungsbetts (6) bis zum Ausgang ausgehärtet werden und danach die so erhaltenen gebogenen Glasscheiben abgenommen werden, **dadurch gekennzeichnet, dass** ein Formgebungsbett (6) gebildet wird, dessen Profil sich in einem Kreisbogen mit mehr als 90° erstreckt, **und dass** die Fortbewegung der ausgehärteten Glasscheiben (1) nach dem Formgebungsbett (6) in einer Richtung sichergestellt wird, die entgegengesetzt zu derjenigen ist, in welcher sie zuvor befördert worden sind.

2. Verfahren nach Anspruch 1, **dadurch gekennzeichnet, dass** die Glasscheiben (1) horizontal zum Formgebungsbett (6) gebracht und sie ebenfalls horizontal nach dem Formgebungsbett (6) befördert werden.

3. Verfahren nach Anspruch 1 oder 2, **dadurch gekennzeichnet, dass** die Glasscheiben (1) in einer ebenen Bahn durch einen Erwärmungsofen (2), um sie auf Erweichungstemperatur zu bringen, und anschließend in der gekrümmten Bahn des Formgebungsbetts (6), die sich an die vorhergehende ebene Bahn anschließt, durchlaufen gelassen werden.

4. Verfahren nach Anspruch 1 oder 2, **dadurch gekennzeichnet, dass** ein vorhergehender Biegevorgang durch Einsinkenlassen der Glasscheiben (1), die auf ihre Erweichungstemperatur gebracht worden sind, vor ihrem Durchlauf über das Formgebungsbett (6) durchgeführt wird.

5. Verfahren nach einem der Ansprüche 1 bis 4, **dadurch gekennzeichnet, dass** die Glasscheiben (1) über das Formgebungsbett (6) in einer aufsteigenden Bahn durchlaufen gelassen werden, wobei Gegenrollen (9) den Förderelementen (7) des Formgebungsbetts (6) in jedem Bereich von diesem, in welchem ein Halten der Glasscheiben (1) erforderlich ist, zugeordnet sind, **und dass** das Umdrehen jeder ausgehärteten Glasscheibe (1) bei deren Abnahme von dem letzten Rolle (7)/Gegenrolle (9)-Paar, das mit dem Formgebungsbett (6) verbunden ist, ausgelöst wird, wobei die so umgedrehten Glasscheiben (1) von einem Förderband (15) und anschließend von einem Rollenförderer (12) aufgenommen werden, um sie zum Ausgang zu befördern.

6. Verfahren nach Anspruch 5, **dadurch gekennzeichnet, dass** das Umdrehen einer ausgehärteten Glasscheibe (1) bewirkt wird, indem sie unmittelbar nach ihrer Abnahme unter dem Einfluss ihrer Geschwindigkeit zum Schleudern gebracht wird, um mit ihrem unteren Rand des vorderen Endes (16) an dem oberen Teil einer Rolle (14) zum Anschlag zu kommen, die in einer Achse parallel zu derjenigen der Förderelemente (7) des Formgebungsbetts (6) frei beweglich angebracht ist, wobei dann die ausgehärtete Glasscheibe (1) um diese Kontaktlinie mit der frei beweglichen Rolle (14) unter dem Einfluss ihres Gewichts kippt, um im umgedrehten Zustand auf das Aufnahmeförderband (15) zu fallen.

7. Verfahren nach Anspruch 5, **dadurch gekennzeichnet, dass** das Umdrehen einer ausgehärteten Glasscheibe (1) verursacht wird, indem sie unmittelbar nach ihrer Abnahme unter dem Einfluss ihrer Geschwindigkeit zum Schleudern gebracht wird, um sich mit ihrer Unterseite an eine vorzugsweise drehbar angebrachte Rolle (14a) mit einer Achse parallel zu derjenigen der Förderelemente (7) des Formgebungsbetts (6) anzulegen, indem Luft unter die Glasscheibe (1) in dem Bereich geblasen wird, der sich in Durchlaufrichtung vor ihrer Kontaktlinie mit der Rolle (14a) befindet, um das Kippen der ausgehärteten Glasscheibe (1) um die Rolle (14a) zu bewirken, damit sie im umgedrehten Zustand auf das Aufnahmeförderband (15) fällt.

8. Verfahren nach einem der Ansprüche 1 bis 4, **dadurch gekennzeichnet, dass** die Glascheiben (1) über das Formgebungsbett (6) in einer absteigenden Bahn durchlaufen gelassen werden, wobei Gegenrollen (9) mit den Förderelementen (7) des Formgebungsbetts (6) in jedem Bereich von diesem verbunden sind, in welchem ein Halten der Glasscheiben (1) erforderlich ist, und **dass** die ausgehärteten Glasscheiben (1) nach dem Formgebungsbett (6) durch einfaches Ablegen auf ein Förderband aufgenommen und anschließend von einem Rollenförderer (12) oder durch direktes Ablegen auf einen Rollenförderer, um sie zum Ausgang zu bringen, aufgenommen werden.

9. Verfahren nach einem der Ansprüche 5 bis 8, **dadurch gekennzeichnet, dass** perforierte Förderbänder (15) oder Fördergurte verwendet werden, um ein Abkühlen durch Aufblasen von Luft von unten auf die Unterseite der beförderten Glasscheiben (1) zu ermöglichen.

10. Verfahren nach einem der Ansprüche 1 bis 9, **dadurch gekennzeichnet, dass** die Förderelemente (7) des Formgebungsbetts (6) aus eine Symmetrieachse besitzenden Stäben wie zylindrischen, kegelförmigen und doppeltkegelförmigen Stäben, die sich um sich selbst drehen, und gegengebogenen oder gebogenen Elementen, die von sich drehenden röhrenförmigen Hüllen umgeben sind, ausgewählt werden, wobei die Formen der Förderelemente sich entlang des Formgebungsbereichs des Formgebungsbetts (6) verändern können.

11. Verfahren nach einem der Ansprüche 1 bis 10, **dadurch gekennzeichnet, dass** der Biegevorgang mit einem Krümmungsradius des Formgebungsbetts (6) durchgeführt wird, d.h. in einer Linie parallel zur Durchlaufrichtung, von 1 bis 2 Metern und einem Krümmungsradius einer Linie quer zur Durchlaufrichtung von 5 Metern bis unendlich.

12. Verfahren nach einem der Ansprüche 1 bis 11, **dadurch gekennzeichnet, dass** Glasscheiben (1) durchlaufen gelassen werden, die ihre Form bei einer Temperatur von 600 bis 700 °C angenommen haben.

13. Verfahren nach einem der Ansprüche 1 bis 12, **dadurch gekennzeichnet, dass** die Glasscheiben (1) in dem Vorspannbereich (8) des Formgebungsbettes (6) vorgespannt werden, indem Luft mit einem Druck von 0,98·10⁴ Pa bis 2,94·10⁴ Pa (1 000 bis 3 000 mm Wassersäule) aufgeblasen wird.

14. Verfahren nach einem der Ansprüche 1 bis 13, **dadurch gekennzeichnet, dass** die Luft kontinuierlich auf wenigstens eine Seite der Glasscheiben aufgeblasen wird, die begonnen haben, ihre Form anzunehmen, und bevor diese in den Kühl- oder Vorspannbereich (8) eintreten, unter Bedingungen, welche die endgültige Konkavität der gebogenen Glasscheiben (1) in Bezug auf diejenige, die ihnen im abschließenden Biegevorgang ohne diesen Blasvorgang verliehen würde, asymmetrisch beeinflussen können.

15. Verfahren nach einem der Ansprüche 1 bis 14, **dadurch gekennzeichnet, dass** Glasscheiben (1) mit einer Dicke von 1 bis 6 mm gebogen werden.

16. Verfahren nach einem der Ansprüche 1 bis 15, **dadurch gekennzeichnet, dass** der Abstand zwischen den Glasscheiben (1) auf dem Formgebungsbett (6) mit einem Wert von 2 bis 20 cm geregelt wird.

17. Verfahren nach einem der Ansprüche 1 bis 16, **dadurch gekennzeichnet, dass** ausgehärtete gebogene Glasscheiben (1) mit einem Takt von mindestens einer Scheibe alle vier Sekunden und insbesondere einer Glasscheibe pro Sekunde erhalten werden.

18. Vorrichtung zum Biegen von Glasscheiben, die Mittel umfasst, um Glasscheiben, die zuvor auf Erweichungstemperatur gebracht worden sind, über ein Formgebungsbett (6) durchlaufen zu lassen, das von Elementen (7) gebildet wird, die ihre Beförderung erlauben und in einer Bahn mit einem kreisbogenförmigen Profil angeordnet sind, **dadurch gekennzeichnet, dass** sich das Formgebungsbett (6) mit einem Kreisbogen von über 90° erstreckt, **und dass** Mittel vorgesehen sind, um die gebogenen Glasscheiben (1) nach dem Formgebungsbett (6) in einer Richtung aufzunehmen, die entgegengesetzt zu derjenigen ist, in welcher sie zuvor befördert worden sind.

19. Vorrichtung nach Anspruch 18, in welcher der Durchlauf der Glasscheiben (1) aufsteigend vorgesehen ist, **dadurch gekennzeichnet, dass** die Mittel zur Aufnahme der Glasscheiben (1) Mittel (14; 14a) umfassen, um sie umzudrehen, bevor sie von einem Förderband (15) aufgenommen werden.

20. Vorrichtung nach Anspruch 19, **dadurch gekennzeichnet, dass** die Umkehrmittel aus einer beweglich angebrachten Rolle (14) mit einer parallelen Achse zu derjenigen der Förderelemente (7) des Formgebungsbetts bestehen, die mit einer derartigen Höhe angeordnet ist, dass die Glasscheiben (1), die von dem Formgebungsbett (6) ausgestoßen werden, mit ihrem unteren Rand des vorderen Endes (16) an dem oberen Teil der Rolle (14) zum Anschlag kommen.

21. Vorrichtung nach Anspruch 19, **dadurch gekennzeichnet, dass** die Umkehrmittel aus einer vorzugsweise beweglich angebrachten Rolle (14a) mit einer parallelen Achse zu derjenigen der Förderelemente (7) des Formgebungsbetts (6) bestehen, die mit einer derartigen Höhe angeordnet ist, dass die vom Formgebungsbett (6) ausgestoßenen Glasscheiben (1) sich mit ihrer Unterseite an die Rolle (14a) anlegen, wobei Mittel wie Mittel zum Aufblasen von Luft vorgesehen sind, um das Kippen der ausgehärteten Glasscheibe (1) um die Rolle (14a) zu bewirken.

22. Vorrichtung nach Anspruch 18, in welcher der Durchlauf der Glasscheiben absteigend vorgesehen ist, **dadurch gekennzeichnet, dass** die Mittel zur Aufnahme der Glasscheiben aus Mitteln zur Aufnahme durch ein Förderband oder einen Rollenförderer (12) bestehen.

23. Vorrichtung nach einem der Ansprüche 19 bis 22, **dadurch gekennzeichnet, dass** die Förderbänder (12) perforierte Förderbänder oder Fördergurte sind.

24. Vorrichtung nach einem der Ansprüche 18 bis 23, **dadurch gekennzeichnet, dass** die Förderelemente (7) des Formgebungsbetts (6) aus eine Symmetrieachse aufweisenden Stäben wie zylindrischen, kegelförmigen und doppeltkegelförmigen Stäben, die sich um sich selbst drehen, und gegengebogenen oder gebogenen Elementen, die von sich drehenden röhrenförmigen Hüllen umgeben sind, ausgewählt sind, wobei die Formen der Förderelemente (7) sich entlang des Formgebungsbereichs (15) des Formgebungsbetts (6) verändern können.

25. Vorrichtung nach einem der Ansprüche 18 bis 24, **dadurch gekennzeichnet, dass** Gegenrollen (9) mit den Förderelementen (7) des Formgebungsbetts (6) in jedem Bereich von diesem verbunden sind, in welchem ein Halten der Glasscheiben (1) erforderlich ist.

26. Vorrichtung nach einem der Ansprüche 18 bis 25, **dadurch gekennzeichnet, dass** sie Mittel (9) zum Vorspannen oder Abkühlen der Glasscheiben, nachdem diese ihre Form angenommen haben, umfasst, wobei die Mittel insbesondere aus Blaskästen für das Vorspannen bestehen, die jeweils Düsen enthalten, die in Reihen angeordnet und zwischen zwei benachbarte Förderelemente (7) des Formgebungsbetts (6) gerichtet sind.

27. Vorrichtung nach einem der Ansprüche 18 bis 26, **dadurch gekennzeichnet, dass** sie außerdem mindestens eine Düse zum kontinuierlichen Aufblasen von Luft umfasst, die an einer Stelle der Linie für den Durchlauf der Glasscheiben (1) angeordnet ist, nachdem die Glasscheiben (1) mit der Formgebung begonnen haben, und bevor diese in den Abkühl- oder Vorspannbereich (8) eintreten, wobei die Düse(n) angeordnet ist (sind), um ein asymmetrisches Aufblasen von Luft auf die Glasscheiben (1) zu realisieren, und geregelt wird (werden), damit das Aufblasen der Luft die endgültige Konkavität der gebogenen Glasscheiben (1) in Bezug auf diejenige beeinflusst, die ihnen der abschließende Biegevorgang ohne diesen Blasvorgang verliehen hätte.
